# EUROPÄISCHE PATENTANMELDUNG

(11) **EP 3 703 340 A1**
(43) Veröffentlichungstag der Anmeldung: **02.09.2020**
(21) Anmeldenummer: 19159338.3
(22) Anmeldetag: 26.02.2019
(51) Int. Cl.: H04L 29/08, H04L 12/725

(54) **VERFAHREN ZUM BETREIBEN VON NETZWERKGERÄTEN IN EINEM NETZWERK, RECHENEINRICHTUNG SOWIE NETZWERK**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Die Erfindung betrifft ein Verfahren zum Betreiben von Netzwerkgeräten (2) in einem Netzwerk (1), bei welchem den jeweiligen Netzwerkgeräten (2) Netzwerkfunktionen (A bis D) zugeordnet werden, wobei bei einer Durchführung der jeweiligen Netzwerkfunktionen (A bis D) für eine Bearbeitung und Weiterleitung von Daten zwischen den Netzwerkgeräten (2) sowie für Kommunikationspfade in dem Netzwerk (1) Regeln vorgegeben werden, wobei zumindest eine der Netzwerkfunktionen (A bis D) als virtualisierte Funktion auf einer von den Netzwerkgeräten (2) verschiedenen Recheneinrichtung (6) des Netzwerks (1) ausgeführt wird.

## Beschreibung

Die vorliegende Erfindung betrifft ein Verfahren zum Betreiben von Netzwerkgeräten in einem Netzwerk, bei welchem den jeweiligen Netzwerkgeräten Netzwerkfunktionen zugeordnet werden, wobei bei einer Durchführung der jeweiligen Netzwerkfunktionen für eine Bearbeitung und Weiterleitung von Daten zwischen den Netzwerkgeräten sowie für Kommunikationspfade in dem Netzwerk Regeln vorgegeben werden. Des Weiteren betrifft die vorliegende Erfindung eine Recheneinrichtung sowie ein Netzwerk. Schließlich betrifft die vorliegende Erfindung ein Computerprogrammprodukt sowie ein computerlesbares (Speicher) medium.

In zukünftigen industriellen Netzwerken sollen die Echtzeitmechanismen der IEEE 802.1 Standardisierung eingesetzt werden. Die Mechanismen sind in der IEEE Arbeitsgruppe TSN (Time-Sensitive Networking) entstanden, weswegen die Erweiterungen auch unter dem Arbeitsgruppennamen TSN vermarktet werden.

Damit die Echtzeitkommunikation in einem Netzwerk zuverlässig funktioniert, sind in den Netzwerkteilnehmer bestimmte Bedingungen einzuhalten. Eine davon ist die Weiterleitung der Daten auf dem richtigen Weg zwischen den beteiligten Kommunikationspartnern. Dazu ist in jedem Netzwerkelement beziehungsweise in jedem Netzwerkgerät ein Eintrag für die Weiterleitung notwendig. Eine weitere Bedingung ist genügend Speicher, damit selbst die größte temporär vorhandene Last abgefangen werden kann und es nicht zu einem Verlust von Echtzeitdaten kommt. Da der Speicher in den Netzwerkgeräten limitiert ist, wird der Fluss der Daten oft beschränkt. Diese Beschränkung muss ebenfalls sichergestellt werden. Je nach System ist eine Anpassung an die aktuell aktiven Echtzeit-Verbindungen im Netzwerk vorgesehen.

Mit Hilfe der aktuellen Netzwerktopologie kann zudem eine Optimierung der Weiterleitung erfolgen. Durch die Wahl eines kurzen Wegs kann zum Beispiel die Übertragungszeit von Daten im Netzwerk reduziert werden. Zusätzlich zur Datenübertragung kann für eine verteilte Anwendung eine Zeit zur internen Synchronisation notwendig sein. Die Zeitinformation kommt dabei bevorzugt aus dem Netzwerk und wird an alle Teilnehmer des Echtzeit-Systems verteilt. Dadurch können Netzwerkfunktionen beziehungsweise Netzwerkanwendungen die Zeitinformation zur Synchronisation von Datenerfassung, Auswertung und Reaktion verwenden. Eine Synchronisierung von Aktionen in mehreren Teilnehmern wird möglich.

Zusammen mit der Einführung der TSN Mechanismen wurden in der IEEE 802.1 Protokolle definiert, welche eine möglichst selbstständige Einrichtung im Netzwerk für die Übertragung von Echtzeitdaten und der Konfiguration der Synchronisation ermöglichen. Für die Einrichtung der Echtzeitkommunikation (Streams) wurde eine Peer-to-Peer (P2P) Protokoll definiert, das Stream Reservation Protocol (SRP), welches auf Basis von MRP (Multiple Registration Protocol) auf dem Austausch von Nachrichten zwischen zwei Ports eines Links basiert. Durch die direkte Übertragung zum Nachbargerät im Netzwerk kann dort jeweils eine lokale Entscheidung getroffen werden. So wird bei der Stream Reservierung im Netzwerk auf einem schleifenfreien Pfad (Voraussetzung für SRP) eine Stream Beschreibung weitergeleitet. In den Netzwerkgeräten wird lokal geprüft, ob die Übertragung möglich wäre und eine Weiterleitung von Daten verhindert. Erst durch die Anmeldung des Empfängers am Netzwerk werden alle benötigten Ressourcen reserviert und die Weiterleitung wird aktiviert.

Die für die Ressourcenprüfung notwendigen Algorithmen sind dabei im jeweiligen Netzwerkgerät implementiert, da keine einheitliche Implementierung vorgeschrieben ist. Bei einer Anpassung des allgemeinen Stream-Reservierungsmodells, wie zum Beispiel für lange Linien, die typisch für die industrielle Automatisierung sind, muss in jedem Netzwerkgerät die Erweiterung des Algorithmus implementiert werden. Die Reservierung der Ressourcen wird wie bisher auch schon im Netzwerkgerät durchgeführt. Eine Optimierung des Algorithmus erfordert somit eine Anpassung aller betroffenen Netzwerkgeräte, da der optimierte Algorithmus in jedem Gerät berücksichtigt werden muss.

Ähnliche Optimierungen sind in industriellen Netzwerken bereits für die Pfadberechnung bekannt. Bei der Zeitsynchronisation kann ebenfalls ein Algorithmus für die Bestimmung des Pfades zur Übertragung der Zeitinformationsnachrichten vorgesehen sein. Dieser ist für eine möglichst universelle Anwendung optimiert und muss somit mit beliebigen Netzwerkausdehnungen funktionieren. Eine vom Anwendungsfall abhängige Optimierung ist aber nicht vorgesehen.

Es ist möglich mehrere, Zeiten im Netzwerk zu übertragen, die dafür vorteilhaften Redundanzmechanismen sind jedoch nicht beschrieben. Die Verwendung von mehreren Zeiten aus dem Netzwerk in der lokalen Anwendung wird nicht durch die IEEE definiert. Bei der Pfadberechnung ist der Algorithmus zur Berechnung von zwei Wegen für eine redundante Übertragung in IEEE 802.1 Qca - ISIS SPB PCR definiert. Dieser funktioniert ebenfalls in einer beliebig komplexen Topologie. Für industrielle Netzwerke mit großen Ringen wäre eine vereinfachte Variante mit der reinen Drehrichtung denkbar - diese ist aber nur bei Ringen einsetzbar und damit nicht universell genug für einen einheitlichen Mechanismus.

Es ist Aufgabe der vorliegenden Erfindung, eine Lösung aufzuzeigen, wie der Betrieb von Netzwerkgeräten der eingangs genannten Art auf einfache und zuverlässige Weise an die Netzwerkfunktionen und/oder die Ausgestaltung des Netzwerks angepasst werden kann.

Diese Aufgabe wird erfindungsgemäß durch ein Verfahren, durch eine Recheneinrichtung, durch ein Netzwerk, durch ein Computerprogrammprodukt sowie durch ein computerlesbares (Speicher)medium gemäß den Merkmalen der unabhängigen Ansprüche gelöst. Vorteilhafte Weiterbildungen der vorliegenden Erfindung sind in den abhängigen Ansprüchen angegeben.

Ein erfindungsgemäßes Verfahren dient zum Betreiben von Netzwerkgeräten in einem Netzwerk. Hierbei werden den jeweiligen Netzwerkgeräten Netzwerkfunktionen zugeordnet, wobei für eine Durchführung der jeweiligen Netzwerkfunktionen optional eine Zeitsynchronisation bereitgestellt wird und für eine Bearbeitung und Weiterleitung von Daten zwischen den Netzwerkgeräten sowie für Kommunikationspfade in dem Netzwerk Regeln vorgegeben werden. Dabei ist vorgesehen, dass zumindest eine der Netzwerkfunktionen als virtualisierte Funktion auf einer von den Netzwerkgeräten verschiedenen Recheneinrichtung des Netzwerks ausgeführt wird.

Mit Hilfe des Verfahrens sollen einzelne Netzwerkgeräte eines Netzwerks betrieben werden. Die Netzwerkgeräte können auch als Netzwerkkomponenten bezeichnet werden. Das Netzwerkgerät kann ein Netzwerkelement sein. Bei dem Netzwerkgeräte kann es sich auch um ein Endgerät handeln. Die Netzwerkgeräte sind in dem Netzwerk zur Datenübertragung miteinander verbunden. Insbesondere kann das Netzwerk in einer Automatisierungsanlage und/oder Fertigungsanlage verwendet werden. In diesem Fall können die jeweiligen Netzwerkgeräte beispielsweise Sensoren und/oder Aktoren der Anlage zugeordnet sein. Insbesondere ist vorgesehen, dass innerhalb des Netzwerks beziehungsweise zwischen den Netzwerkgeräten eine Echtzeitkommunikation ermöglicht wird. Das Netzwerk kann gemäß der TSN-Technologie beziehungsweise dem Standard IEEE 802.1 ausgebildet sein. Insbesondere ist das Netzwerk gemäß dem Standard IEEE 802.1 CS ausgebildet.

Zum Betrieb der Netzwerkgeräte beziehungsweise für die Datenübertragung zwischen den Netzwerkgeräten kann eine Zeitsynchronisation vorgesehen sein. Dies bedeutet, dass bevorzugt alle teilnehmenden Netzwerkgeräte ein gemeinsames Verständnis der Zeit benötigen. Die Zeitsynchronisation kann insbesondere für Endgeräte und/oder bei der Weiterleitung genutzt werden. Dabei können die Anwendungen selbst entweder synchronisiert sein (Endgeräte) oder nur beispielsweise periodisch zeitkritische Daten übertragen, die dann ausgewertet werden. Die Zeitsynchronisation kann für die Anwendungen genutzt werden - theoretisch können diese aber auch freilaufend sein beziehungsweise eine andere Art der Synchronisation verwenden (nicht IEEE 802.1 AS).

TSN hat mehrere sogenannte "Shaper" und Transmission Selection Mechanismen definiert, wobei die meisten davon keine synchronisierte Zeit in den Netzwerkgeräten benötigen. Die Übertragung der Daten kann selbst beispielsweise nur bei Verwendung von IEEE 802.1 Qbv - Enhancements for Scheduled Traffic und in einer möglichen Variante von IEEE 802.1 Qch von der synchronisierten Zeit abhängig sein. Es können auch andere Mechanismen, insbesondere die protokollbasierte Konfiguration von Shapern, welche nicht auf einer synchronisierten Datenübertragung zwischen den Netzwerkgeräten basiert, verwendet werden. Zudem können beispielsweise Verhältnisse zwischen Paketlängen und darauf folgenden Sendepausen berücksichtigt werden.

Darüber hinaus ist vorgesehen, dass die Bearbeitung und Weiterleitung von Daten nach den gleichen vorbestimmten Regeln durchgeführt wird. Darüber hinaus erfolgt die Auswahl der Kommunikationspfade nach bestimmten Regeln. Hierbei kann vorgesehen sein, dass die Netzwerkgeräte bei der Auswahl und Reservierung von Bandbreite und Kommunikationspfaden nach den gleichen Regeln arbeiten.

Gemäß einem wesentlichen Aspekt der vorliegenden Erfindung ist vorgesehen, dass zumindest eine der Netzwerkfunktionen als virtualisierte Funktion auf einer von den Netzwerkgeräten verschiedenen Recheneinrichtung des Netzwerks ausgeführt wird. In dem Netzwerk kann also zusätzlich zu den Netzwerkgeräten die separate Recheneinrichtung bereitgestellt werden. Diese Recheneinrichtung kann als Host ausgebildet sein. Es kann auch vorgesehen sein, dass mehrere Recheneinrichtungen bereitgestellt werden, auf denen die Netzwerkfunktionen als virtualisierte Funktionen ausgeführt werden. Somit können die Netzwerkfunktionen beziehungsweise deren Berechnung auf die Recheneinrichtung ausgelagert werden. Dies ermöglicht den Einsatz von virtualisierten Funktionen, die nicht mehr auf dem zu konfigurierenden Netzwerkgerät laufen müssen. Dies ist insbesondere vorteilhaft, wenn eine Netzwerkkomponente für eine Netzwerkfunktion nicht genügend Rechenleistung zur Verfügung hat. Je nach Ausgestaltung des Netzwerks beziehungsweise der einzelnen Netzwerkgeräte können dann von der Recheneinrichtung die Netzwerkfunktionen ausgeführt werden. Somit kann der Betrieb der Netzwerkgeräte auf einfache und zuverlässige Weise an die Netzwerkfunktionen und/oder die Ausgestaltung des Netzwerks angepasst werden kann.

Bevorzugt wird auf dem Netzwerkgerät, von welchem die zumindest eine Netzwerkfunktion auf der Recheneinrichtung als virtualisierte Funktion ausgeführt wird, eine getrennte Übertragungsschicht für eine Übertragung der Daten zwischen der Recheneinrichtung und dem Netzwerkgerät bereitgestellt. Wie bereits erläutert ist, das Netzwerk insbesondere gemäß dem Standard IEEE 802.1 CS ausgebildet. In IEEE 802.1 CS ist der Nachfolger von MRP (Multiple Registration Protocol) definiert. Durch die Einführung der getrennten Übertragungsschicht kann eine Übertragung auch zu einem Stellvertreter beziehungsweise der Recheneinrichtung delegiert werden. Anhand der Codierungen in der Transportschicht kann so eine IP-Kommunikation verwendet werden. Insbesondere kann die Anwendung des link-lokalen Registrierungsprotokolls (Link-local registration protocol - LRP) vorgesehen sein. Dieses linklokale Registrierungsprotokoll ermöglicht die Kombination von Netzwerkelementen und Slave-Endgeräten in einem Netzwerk. Die Ausführung der Netzwerkfunktion (Application) erfolgt dann für das Netzwerkgerät in der Recheneinrichtung beziehungsweise einem Proxy-System, wodurch das Netzwerkgerät selbst zum Slave wird. Des Weiteren ermöglicht die Ausführung in dem Proxy so eine Zentralisierung von vielen einzelnen Instanzen einer Netzwerkfunktion in einem Gerät. Die Recheneinrichtung kann hier als Proxy dienen.

In einer Ausführungsform wird eine zwischen dem Netzwerkgerät, von welchem die zumindest eine Netzwerkfunktion auf der Recheneinrichtung als virtualisierte Funktion ausgeführt wird, und der Recheneinrichtung eine Datenverbindung gemäß den vorgegebenen Regeln für die Kommunikationspfade bereitgestellt. Auf einem Netzwerklink kann die Kommunikation zwischen den zwei benachbarten Netzwerkgeräten entweder direkt untereinander erfolgen oder mit der virtualisierten Funktion in einem Proxy stattfinden. Die Regeln können beispielsweise beschreiben, dass Daten nur zwischen benachbarten Netzwerkgeräten übertragen werden können. Dabei kann die Datenverbindung zwischen den Netzwerkgeräten und der Recheneinrichtung so ausgestaltet werden, dass den Netzwerkgeräten quasi vorgetäuscht wird, dass die Daten von einem benachbarten Netzwerkgerät stammen, obwohl sie tatsächlich von der Recheneinrichtung stammen. Die Erreichbarkeit der jeweils zuständigen Funktion kann direkt am Nachbargerät abgefragt werden. So kann die Proxy-Funktion (Ausführung der Netzwerkfunktion auf einem anderen Gerät) erfolgen. Die bisherigen P2P Protokolle basieren auf einem direkten Austausch zwischen den Nachbargeräten und einer lokalen Konfiguration. Durch die virtualisierten Funktionen auf der Recheneinrichtung kann diese Anwendung optimiert werden.

In einer weiteren Ausführungsform werden mehrere Netzwerkfunktionen als virtualisierte Funktionen auf der Recheneinrichtung ausgeführt, wobei eine Auswahl der Netzwerkfunktionen in Abhängigkeit von einem jeweiligen Rechenbedarf der Netzwerkfunktionen durchgeführt wird. Wie bereits erläutert, können auf der Recheneinrichtung mehrere virtualisierte Funktionen ausgeführt werden. Die Netzwerkfunktionen, die auf die Recheneinrichtung ausgelagert werden, können in Abhängigkeit von der Rechenleistung beziehungsweise den Ressourcen der jeweiligen Netzwerkgeräte bestimmt werden.

In einer weiteren Ausgestaltung wird die Auswahl der Netzwerkgeräte in Abhängigkeit von einer Topologie des Netzwerks und/oder der Netzwerkgeräte durchgeführt. In Industrienetzwerken kann so beispielsweise die Pfadberechnung für Ringsegmente deutliche vereinfacht werden und es kann zudem eine Information der Rinports verwendet werden, um zwei redundante Pfade im Ringsegment zu bestimmen. Eine spezielle Ressourcenberechnungsvariante für lange Linien unter Beachtung der Sendereihenfolge eines Endgerätes wird ebenfalls möglich. Dies ist durch die Auswahl der zu verwendenden Netzwerkfunktionsvariante für die Geräte in der Linie möglich.

Weiterhin ist vorteilhaft, wenn eine Zeitsynchronisation bereitgestellt wird, wobei für die Zeitsynchronisation bei der Übertragung der Daten ein Zeitstempel bereitgestellt wird und eine lokale Zeit durch die virtualisierte Funktion nachgeführt wird. Für die Zeitsynchronisation kann der Redundanzmechanismus durch einen Algorithmus zur Bestimmung der Zeit eingeführt werden. Dazu ist die lokale Datenweiterleitung und Zeitstempelung von gesendeten Frames lokal implementiert (Hardware) und wird durch eine virtualisierte Netzwerkfunktion zur Nachführung der lokalen Zeit ergänzt. Dies ermöglicht es, in Teilbereich des Netzwerkes einen optimierten Algorithmus auf einem gemeinsamen Proxy (Network Function Controller) auszuführen.

Bei der Reservierung können so unterschiedliche Ressourcenberechnungsmodelle implementiert werden. Des Weiteren können bei der Pfadfindung für Netzwerkbereiche vereinfachte Algorithmen unter Berücksichtigung der Topologie eingesetzt werden. Durch die Trennung der beiden Funktionen Weiterleitung und Ressourcen-Reservierung mit definierten Schnittstellen zwischen den Schichten kann SRP als virtualisierte Netzwerkfunktion auch außerhalb einer Bridge ablaufen. Die Weiterleitung kann ebenfalls außerhalb berechnet werden und lokal eingerichtet werden. Dadurch kann die Reservierung als Netzwerkfunktion betrachtet werden und durch einen Zugriff von extern auf die lokalen Einstellungen kann eine virtualisierte Reservierung als eine von vielen Funktionen auf einem Host im Netzwerk laufen. Die Funktion kann auch in Form einer virtualisierten Reservierung zentralisiert ausgeführt werden. Dadurch kann je nach Netzwerk die gewünschte Optimierung auch nur in Teilbereichen ausgeführt werden. Die zentrale Ausführung führt zu weniger notwendigen Berechnungen in den Netzwerkkomponenten - die benötigten Einstellungen werden nicht mehr lokal berechnet, sondern kommen von der zentralisierten Netzwerkfunktion und werden lokal nur noch vorgenommen.

Die Berechnung der lokal benötigten Ressourcen ist abhängig von den jeweils lokal verwendeten TSN-Mechanismen. Durch die Virtualisierung der Funktion kann für ein Teilnetzwerk eine Optimierung verwendet werden. In langen Linien kann die Latenz durch Verwendung von TAS reduziert werden - da keine BE Kommunikation die Echtzeitdatenübertragung stören kann. Zudem senden Linienteilnehmer meist wenig eigene Echtzeitdaten und leiten viele Daten weiter. Beides kann bei der Berechnung der Ressourcen und der Latenz pro Hop in den Liniensegmenten des Netzwerkes berücksichtigt werden.

In einer weiteren Ausführungsform wird die virtualisierte Funktion in einem Container ausgeführt. Eine virtualisierte Netzwerkfunktion benötigt nur eine IP-Verbindung mit der eigentlichen Komponente (Netzwerkelement oder Endgerät) und kann als Funktion in einem Container ablaufen. Durch das Ausführen einer optimierten Variante der Netzwerkfunktion kann eine Optimierung einfach nachgerüstet werden. Ein Gerät kann die benötigten Standard-Funktionen lokal implementieren. Eine Optimierung kann zum Beispiel als Service dazugekauft werden und wird dann als optimierter Container angeboten, der für die gewünschten Netzwerkgeräte entweder lokal oder im Proxy ausgeführt wird. Die Netzwerkfunktionen selbst können als Container implementiert werden. Spezielle Funktionen können dann als spezialisierten Container getrennt verkauft beziehungsweise bereitgestellt werden. Eine automatische Konfiguration der jeweils passenden Container für die Netzwerkgeräte ist durch Werkzeuge der Container Verwaltung wie zum Beispiel Kubernetes möglich.

Bevorzugt ist das Netzwerk nach dem Standard IEEE 802.1 CS ausgebildet. Somit werden die erweiterten Möglichkeiten von IEEE 802.1 CS mit den Möglichkeiten einer Virtualisierung von Funktionen im Netzwerk kombiniert. Dadurch können einfache Endgeräte entlastet werden. Zudem kann ein System mit sehr einfachen Komponenten und einem leistungsfähigen Proxy entstehen.

Eine erfindungsgemäße Recheneinrichtung für ein Netzwerk ist dazu ausgebildet, zumindest eine Netzwerkfunktion eines Netzwerkgeräts als virtualisierte Funktion auszuführen. Die Recheneinrichtung kann als Netzwerk-Controller ausgebildet sein. Ein Netzwerk Controller für Industrienetzwerke kann für Teilbereiche die Funktionen lokal ausführen, um gezielte Optimierungen vorzunehmen. Dies kann beispielsweise anhand der Netzwerktopologie oder der Anwendung (geforderte Synchronisationsgenauigkeit mit angepasstem Redundanzalgorithmus) erfolgen.

Ein erfindungsgemäßes Netzwerk, insbesondere für eine Automatisierungsanlage und/oder Fertigungsanlage, umfasst eine Mehrzahl von Netzwerkgeräten und eine erfindungsgemäße Recheneinrichtung. Zusätzlich kann ein Industrienetzwerk mit an die jeweilige Netzwerktopologie und den jeweiligen Einsatzzweck angepassten Algorithmen optimiert werden, ohne dabei die Funktionen in den beteiligten Netzwerkgeräten ändern zu müssen. Die Einführung der virtualisierten Netzwerkfunktionen ermöglicht eine nachträgliche Optimierung des Netzwerks mit Basisfunktionen als Service für Kunden mit höheren Anforderungen. Die Basisfunktionalität kann dabei in allen Komponenten vorhanden sein, durch den Einsatz einer Recheneinrichtung oder eines Netzwerk-Controllers (Host für Netzwerkfunktionen) kann die Optimierung getrennt von den Geräten als Service bereitgestellt werden.

Eine virtualisierte Netzwerkfunktion benötigt weiterhin lokale Einstellungen. Der optimierte Algorithmus ist zu konfigurieren. Dazu ist eine Auswahl der Komponenten notwendig. Für die Weiterleitung zum Host der Netzwerkfunktion ist in IEEE 802.1 CS eine Adresse zu hinterlegen. Für den Service der Optimierung für den jeweiligen Anwendungsfall ist eine Auswahl der Algorithmen notwendig - dies kann beispielsweise über eine Konfigurationsoberfläche eines Netzwerkcontrollers erfolgen. Die interne Ausführung der konfigurierten Funktionen kann dabei dann anhand der Kommunikation mit dem Netzwerkcontroller erfolgen.

Ein erfindungsgemäßes Computerprogramm umfasst Befehle, die bei der Ausführung des Programms durch eine Recheneinrichtung und/oder ein Netzwerk diese beziehungsweise dieses veranlassen, das erfindungsgemäße Verfahren sowie die vorteilhaften Ausgestaltungen davon auszuführen.

Ein erfindungsgemäßes computerlesbares (Speicher)medium umfasst Befehle, die bei der Ausführung durch eine Recheneinrichtung und/oder ein Netzwerk diese beziehungsweise dieses veranlassen, das erfindungsgemäße Verfahren sowie die vorteilhaften Ausgestaltungen davon auszuführen.

Die mit Bezug auf das erfindungsgemäße Verfahren vorgestellten bevorzugten Ausführungsformen und deren Vorteile gelten entsprechend für die erfindungsgemäße Recheneinrichtung, für das erfindungsgemäße Netzwerk, für das erfindungsgemäße Computerprogrammprodukt sowie für das erfindungsgemäße computerlesbare (Speicher)medium.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung eines Netzwerks gemäß dem Stand der Technik, wobei das Netzwerk eine Mehrzahl von Netzwerkgeräten aufweist;
- FIG 2: ein Netzwerk gemäß einer ersten Ausführungsform in einer schematischen Darstellung; und
- FIG 3: ein Netzwerk gemäß einer zweiten Ausführungsform in einer schematischen Darstellung.

In den Figuren werden gleiche oder funktionsgleiche Elemente mit den gleichen Bezugszeichen versehen.

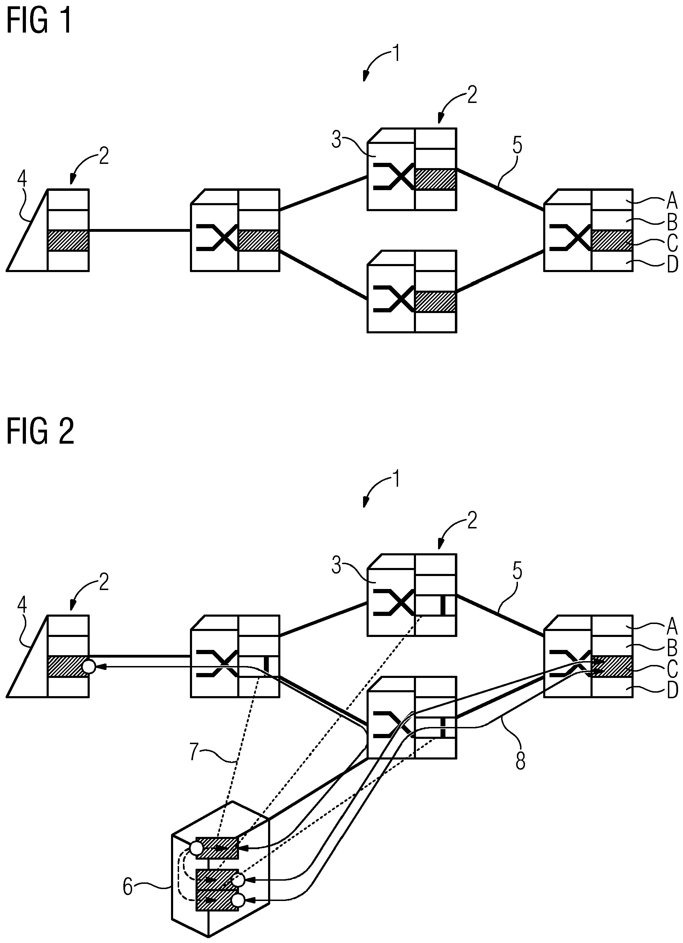

FIG 1 zeigt eine schematische Darstellung eines Netzwerks 1 gemäß dem Stand der Technik. Das Netzwerk 1 umfasst eine Mehrzahl von Netzwerkgeräten 2. In dem vorliegenden vereinfachten Beispiel umfasst das Netzwerk 1 fünf Netzwerkgeräte 2. Die Netzwerkgeräte 2 können als Netzwerkelement 3 oder als Endgerät 4 ausgebildet sein. Die jeweiligen Netzwerkgeräte 2 sind mit der Datenleitung 5 beziehungsweise einer Ethernet-Verbindung miteinander zur Datenübertragung verbunden. Insbesondere ist das Netzwerk gemäß dem Standard IEEE 802.1 CS ausgebildet. Zudem werden auf den jeweiligen Netzwerkgeräten Netzwerkfunktionen A, B, C und D ausgeführt.

FIG 2 zeigt ein Netzwerk 1 gemäß einer ersten Ausführungsform in einer schematischen Darstellung. Im Vergleich zu dem Netzwerk 1 von FIG 1 umfasst dieses Netzwerk 1 zudem eine Recheneinrichtung 6, welche separat zu den Netzwerkgeräten 2 ausgebildet ist. Hierbei ist vorgesehen, dass die Netzwerkfunktion C oder ein Teil davon als virtualisierte Funktion auf der Recheneinrichtung 6 ausgeführt wird. Die jeweiligen Netzwerkgeräte 2 weisen ein link-lokales Registrierungsprotokoll (Link-local registration protocol - LRP) auf. Damit können die Netzwerkgeräte 2 bezüglich der Netzwerkfunktion C als Slave verwendet werden. Die Recheneinrichtung 6 kann als Proxy dienen. Dies ermöglicht den Einsatz von virtualisierten Funktionen, die nicht mehr auf dem zu konfigurierendem Netzwerkgerät 2 laufen müssen. Die jeweiligen Netzwerkgeräte 2 sind über Datenverbindungen 7 mit der Recheneinrichtung 6 verbunden. Die Linien 8 beschreiben den Nachrichtenaustausch der Protokolle. Somit kann den Netzwerkgeräten 2 beispielsweise vorgetäuscht werden, dass sie Daten von einem benachbarten Netzwerkgerät 2 empfangen, obwohl sie Daten tatsächlich von der Recheneinrichtung 6 empfangen werden. Die Kommunikation zwischen direkten Nachbarn erfolgt nun durch logische Beziehungen und abgesetzter Kommunikation. Ferner können Optimierungen von einzelnen Netzwerkfunktionen A bis D gezielt für den vorliegenden Einsatzfall ausgewählt werden.

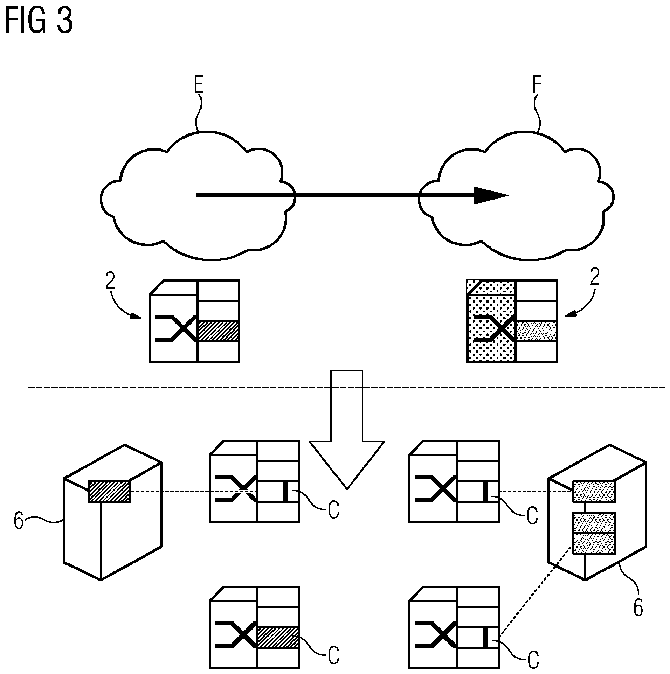

FIG 3 zeigt ein Netzwerk 1 gemäß einer ersten Ausführungsform in einer schematischen Darstellung. Anhand von FIG 3 soll die Optimierung für spezielle Anwendungen erläutert werden. Auf der linken Seite von FIG 3 ist eine erste Anwendung E beziehungsweise ein erstes Netzwerk 1 gezeigt. In diesem Fall wird ein spezielles Netzwerkgerät 2 verwendet. Bei diesem Netzwerkgerät 2 kann es grundsätzlich vorgesehen sein, dass die Netzwerkfunktion C lokal auf dem Netzwerkgerät 2 oder virtualisiert auf der Recheneinrichtung 6 ausgeführt wird. Für eine andere Anwendung F, die auf der rechten Seite von FIG 3 angedeutet ist, kann ein anderes Netzwerkgerät 2 verwendet werden. Hier kann die Netzwerkfunktion C virtualisiert auf der Recheneinrichtung 6 ausgeführt werden.

## Patentansprüche

1. Verfahren zum Betreiben von Netzwerkgeräten (2) in einem Netzwerk (1), bei welchem den jeweiligen Netzwerkgeräten (2) Netzwerkfunktionen (A bis D) zugeordnet werden, wobei bei einer Durchführung der jeweiligen Netzwerkfunktionen (A bis D) für eine Bearbeitung und Weiterleitung von Daten zwischen den Netzwerkgeräten (2) sowie für Kommunikationspfade in dem Netzwerk (1) Regeln vorgegeben werden,
**dadurch gekennzeichnet, dass**
zumindest eine der Netzwerkfunktionen (A bis D) als virtualisierte Funktion auf einer von den Netzwerkgeräten (2) verschiedenen Recheneinrichtung (6) des Netzwerks (1) ausgeführt wird.

2. Verfahren nach Anspruch 1, **dadurch gekennzeichnet, dass** auf den Netzwerkgerät (2), von welchem die zumindest eine Netzwerkfunktion (A bis D) als virtualisierte Funktion auf der Recheneinrichtung (6) ausgeführt wird, eine getrennte Übertragungsschicht für eine Übertragung der Daten zwischen der Recheneinrichtung (6) und dem Netzwerkgerät (2) bereitgestellt wird.

3. Verfahren nach Anspruch 1 oder 2, **dadurch gekennzeichnet, dass** eine zwischen dem Netzwerkgerät (2), von welchem die zumindest eine Netzwerkfunktion (A bis D) als virtualisierte Funktion auf der Recheneinrichtung (6) ausgeführt wird, und der Recheneinrichtung (6) eine Datenverbindung (7) gemäß der vorgegebenen Regeln für die Kommunikationspfade bereitgestellt wird.

4. Verfahren nach einem der vorhergehenden Ansprüche, **dadurch gekennzeichnet, dass** mehrere Netzwerkfunktionen (A bis D) auf der Recheneinrichtung (6) ausgeführt werden, wobei eine Auswahl der Netzwerkfunktionen (A bis D) in Abhängigkeit von einem jeweiligen Rechenbedarf der Netzwerkfunktionen (A bis D) durchgeführt wird.

5. Verfahren nach Anspruch 4, **dadurch gekennzeichnet, dass** die Auswahl der Netzwerkgeräte (2) in Abhängigkeit von einer Topologie des Netzwerks (1) und/oder in Abhängigkeit von den Netzwerkgeräten (2) durchgeführt wird.

6. Verfahren nach einem der vorhergehenden Ansprüche, **dadurch gekennzeichnet, dass** eine Zeitsynchronisation bereitgestellt wird, wobei für die Zeitsynchronisation bei der Übertragung der Daten ein Zeitstempel bereitgestellt wird und eine lokale Zeit durch die virtualisierte Funktion nachgeführt wird.

7. Verfahren nach einem der vorhergehenden Ansprüche, **dadurch gekennzeichnet, dass** die virtualisierte Funktion in einem Container ausgeführt wird.

8. Verfahren nach einem der vorhergehenden Ansprüche, **dadurch gekennzeichnet, dass** das Netzwerk (1) nach dem Standard IEEE 802.1 CS ausgebildet ist.

9. Recheneinrichtung (6) für ein Netzwerk (1), wobei die Recheneinrichtung (6) dazu ausgebildet ist, zumindest eine Netzwerkfunktion (A bis D) eines Netzwerkgeräts als virtualisierte Funktion auszuführen.

10. Netzwerk (1), insbesondere für eine Automatisierungsanlage und/oder Fertigungsanlage, mit einer Mehrzahl von Netzwerkgeräten (2) und mit einer Recheneinrichtung (6) nach Anspruch 9.

11. Computerprogramm, umfassend Befehle, die bei der Ausführung des Programms durch eine Recheneinrichtung (6) und/oder ein Netzwerkgerät (2) diese beziehungsweise dieses veranlassen, das Verfahren nach einem der Ansprüche 1 bis 8 auszuführen.

12. Computerlesbares (Speicher)medium, umfassend Befehle, die bei der Ausführung durch eine Recheneinrichtung (6) und/oder ein Netzwerkgerät (2) diese beziehungsweise dieses veranlassen, das Verfahren nach einem der Ansprüche 1 bis 8 auszuführen.
